# EUROPÄISCHE PATENTSCHRIFT

(11) **EP 1 692 879 B1**
(45) Veröffentlichungstag und Bekanntmachung des Hinweises auf die Patenterteilung: **23.03.2011**
(21) Anmeldenummer: 04766615.1
(22) Anmeldetag: 26.08.2004
(51) Int. Cl.: H04Q 3/00, H04L 12/26, H04B 1/74, H04L 1/22

(54) **VERFAHREN ZUM ERSATZSCHALTEN VON RÄUMLICH GETRENNTEN VERMITTLUNGSSYSTEMEN**
METHOD FOR BACKUP SWITCHING SPATIALLY SEPARATED SWITCHING SYSTEMS
PROCEDE DE COMMUTATION DE REMPLACEMENT DE SYSTEMES DE COMMUTATION SEPARES DANS L'ESPACE

(30) Priorität: 12.12.2003 DE 10358340
(43) Veröffentlichungstag der Anmeldung: 23.08.2006
(73) Patentinhaber: Nokia Siemens Networks GmbH & Co. KG, 81541 München (DE)
(72) Erfinder: LÖBIG, Norbert, 64291 Darmstadt (DE); TEGELER, Jürgen, 82377 Penzberg (DE)
(86) Internationale Anmeldenummer: PCT/EP2004/051927
(87) Internationale Veröffentlichungsnummer: WO 2005/057950

(56) Entgegenhaltungen:
- DE-A- 3 235 661
- US-A1- 2002 152 320
- DATABASE WPI Section EI, Week 200236 Derwent Publications Ltd., London, GB; Class W02, AN 2002-316315 XP002309764 & CN 1 321 004 A (HUAWEI TECH CO LTD) 7. November 2001 (2001-11-07)
- ARDON M T ET AL: "PROVIDING ULTRA-RELIABLE SERVICES USING DISTRIBUTED SWITCH ARCHITECTURES" PROCEEDINGS OF THE XIV INTERNATIONAL SWITCHING SYMPOSIUM, YOKOHAMA, JAPAN, Bd. 1, 25. Oktober 1992 (1992-10-25), Seiten 169-173, XP000337637

## Beschreibung

Zeitgemäße Vermittlungssysteme (Switch) verfügen durch redundantes Bereitstellen wichtiger interner Komponenten über ein hohes Maß an interner Betriebssicherheit. Damit wird im Normalbetrieb eine sehr hohe Verfügbarkeit der vermittlungstechnischen Funktionen erreicht. Treten jedoch massive äußere Einwirkungen auf (z.B. Feuer, Naturkatastrophen, Terroranschläge, kriegerische Einwirkungen etc.), so nutzen die getroffenen Vorkehrungen zur Erhöhung der Betriebssicherheit in der Regel wenig, weil Original- und Ersatzkomponenten des Vermittlungssystems sich am gleichen Ort befinden und damit in einem solchen Katastrophenfall mit hoher Wahrscheinlichkeit beide Komponenten zerstört bzw. funktionsunfähig geworden sind.

Aus der Druckschrift US 2002/152320 A1 (LAU P L), 17. Oktober 2002 (2002-10-17), sind ein System und ein Verfahren bekannt für schnelles Umschalten zwischen redundanten Netzen, welche eine primäre Netzsteuerung umfassen, eine Mehrzahl von Netzgeräten, welche mit der primären Netzsteuerung durch einen primären Netzpfad verbunden sind, und zumindest einen vorbestimmten Ersatznetzpfad. Wenn der primäre Netzpfad aktiv ist, blockiert die Netzsteuerung die vorbestimmten Ersatznetzpfade. Wenn der primäre Netzpfad jedoch ausfällt, blockiert die primäre Netzsteuerung den ausgefallenen primären Netzpfad und schaltet um auf einen der vorbestimmten Ersatznetzpfade.

Aus der Druckschrift Database WPI Section EI, Week 200236 Thomson Scientific, London, GB; Class W02, AN 2002-316315 & CN 1 321 004 A (HUAWEI TECH CO LTD) 7. November 2001 (2001-11-07), sind ein Verfahren und eine Vorrichtung zum Umschal ten zwischen Host und Standby Switches bekannt. Es sind ein Host Main Control Board und ein Standby Main Control Board und ein Host Network Switch Board und ein Standby Network Switch Board vorhanden. Zwei MainControlBoards sind gegenseitig Realzeit kommuniziert, und sie haben gleiche Daten, um hot standby zu implementieren. Ihr Umschalten ist in gegenseitigem Überwachungs- und Steuerungsmodus. Zwei Network Switch Boards laufen synchron für hot standby. Vorteile sind schnelles und sicheres Umschalten.

Die Druckschrift ARDON M ET Al:"PROVIDING ULTRA-RELIABLE SERVICES USING DISTRIBUTED SWITCH ARCHITECTURES" Proceedings of the XIV INTERNATIONAL SWITCHING SYMPOSIUM, YOKOHAMA, JAPAN, Bd. 1, 25. Oktober 1992 (1992-10-25), Seiten 169-173, untersucht verschiedene ultra-zuverlässige Diensttechniken. Die Bedürfnisse von Kunden und Dienstanbieter auf dem Gebiet von ultra-zuverlässigen Diensten werden beschrieben und klassifiziert. Dienstschutztechniken werden diskutiert, welche digitale abgesetzte Einrichtungen mit und ohne autonome Vermittlungsfähigkeit nutzen. Schlüsselplattformen und Architekturelemente werden untersucht, welche beteiligt sind, Kundenzuverlässigkeitsbedürfnisse zu befriedigen.

Als Lösung ist eine geographisch separierte 1:1 Redundanz vorgeschlagen worden. Demgemäss ist vorgesehen, jedem zu schützenden Vermittlungssystem einen identischen Klon als Redundanzpartner mit identischer Hardware, Software und Datenbasis zuzuordnen. Der Klon befindet sich im hochgefahrenen Zustand, ist aber trotzdem vermittlungstechnisch nicht aktiv. Beide Vermittlungssysteme werden von einem im Netz übergeordneten, realzeitfähigen Monitor gesteuert, der die Umschaltevorgänge steuert.

Der Erfindung liegt die Aufgabe zugrunde, ein Verfahren zum Ersatzschalten von Vermittlungssystemen anzugeben, das im

Fehlerfall ein effizientes Umschalten eines ausgefallenen Vermittlungssystems auf einen Redundanzpartner sicherstellt.

Diese Aufgabe wird ausgehend von den im Oberbegriff von Patentanspruch 1 angegebenen Merkmalen durch die im kennzeichnenden Teil beanspruchten Merkmale gelöst. Erfindungsgemäß wird im Zuge einer 1:1 Redundanz von einem übergeordneten Monitor - der in Hardware und/ oder Software realisiert werden kann - eine Kommunikation zu den paarweise angeordneten Vermittlungssystemen (1:1 Redundanz) aufgebaut. Bei Kommunikationsverlust zum aktiven Vermittlungssystem schaltet der Monitor mit Unterstützung des Netzwerkmanagements und den zentralen Steuerungen der beiden Vermittlungssysteme auf das redundante Vermittlungssystem um.

Ein wesentlicher Vorteil der Erfindung ist darin zu sehen, dass der Umschaltevorgang vom aktiven Vermittlungssystem auf das hot-standby Vermittlungssystem vom Netzwerkmanagement und den zentralen Steuereinheiten der beteiligten Vermittlungssystemen unterstützt wird. Damit ist die Erfindung insbesondere für klassischen Vermittlungssystem anwendbar, die TDM Informationen durchschalten. Klassische Vermittlungssysteme weisen in der Regel derartige zentrale Steuereinheiten sowieso auf, so dass hier kein Mehraufwand erforderlich ist. Damit ist diese Lösung umfassend einsetzbar und wirtschaftlich, weil im wesentlichen nur der Aufwand für den Monitor anfällt. Ferner ist sie extrem robust, der Doppelausfall des Monitors stellt kein Problem dar.

Vorteilhafte Weiterbildungen der Erfindungen sind in den Unteransprüchen angegeben.

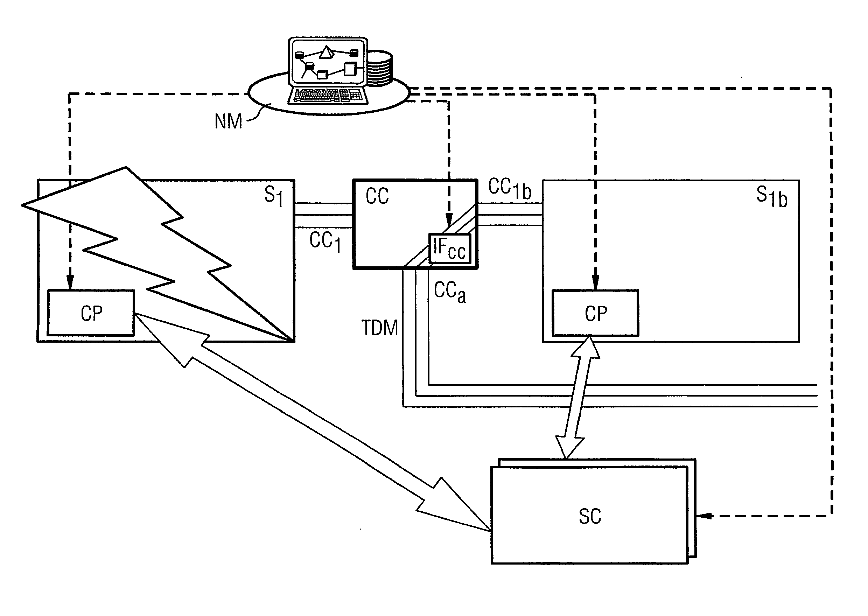

Die Erfindung wird im folgenden anhand eines figürlich dargestellten Ausführungsbeispiels näher erläutert. Hierbei zeigt die Figur die Netzkonfiguration, auf der das erfindungsgemäße Verfahren zum Ablauf gelangt. Demgemäss ist vorgesehen, jedem zu schützenden Vermittlungssystem (z. B. S₁) einen identischen Klon als Redundanzpartner (z. B. S_{1b}) mit identischer Hardware, Software und Datenbasis zuzuordnen. Der Klon befindet sich im hochgefahrenen Zustand, ist aber trotzdem vermittlungstechnisch nicht aktiv (Betriebszustand "hot standby"). Damit ist eine hochverfügbare, über mehrere Lokationen verteilte 1:1 Redundanz von Vermittlungssystemen definiert. Da die Vermittlungssysteme S₁, S_{1b} TDM Informationen durchschalten, ist zusätzlich mindestens eine Crossconnect-Vorrichtung CC erforderlich, die den gesamten TDM Verkehr zwischen Vermittlungssystem S₁ und redundanten Vermittlungssytem S_{1b} umschalten kann. Die TDM Strecken des Vermittlungssystems S₁ treten im Normalbetrieb am Punkt CC₁ der Crossconnect-Vorrichtung CC ein bzw. aus und am Punkt CCₐ wieder aus bzw. ein. Die TDM Strecken des Vermittlungssystems S_{1b} treten am Punkt CC_{1b} in die Crossconnect-Vorrichtung CC ein bzw. haben dort in Rückrichtung ihren Ursprung. Eine Durchschaltung in der Crossconnect-Vorrichtung CC erfolgt jedoch nicht.

Beide Vermittlungssysteme (Vermittlungssystem S₁ und der Klon oder Redundanzpartner S_{1b}) werden von demselben Netzwerkmanagementsystem NM gesteuert. Die Steuerung erfolgt derart, dass der aktuelle Stand von Datenbasis und Software beider Vermittlungssysteme S₁, S_{1b} identisch gehalten wird. Dies wird erreicht, indem jedes betriebstechnische Kommando, jedes Konfigurationskommando und jedes Software-Update inklusive Patches identisch an beide Partner ausgebracht wird. Damit ist der räumlich abgesetzte, identische Klon zu dem in Betrieb befindlichen Switch mit identischer Datenbasis und identischem Softwarestand definiert.

Die Datenbasis beinhaltet grundsätzlich alle semipermanenten und permanenten Daten. Hierbei werden unter permanenten Daten die Daten verstanden, die als Code in Tabellen abgelegt sind und die sich nur per Patch oder Software-Update ändern lassen. Unter semipermanenten Daten werden die Daten verstanden, die z. B. über die Bedienerschnittstelle in das System gelangen und die für längere Zeit dort in der Form der Eingabe gespeichert sind. Mit Ausnahme der Konfigurationszustände des Systems werden diese Daten i.a. vom System nicht selbst verändert. Nicht in der Datenbasis enthalten sind die einen Ruf begleitenden transienten Daten, die das Vermittlungssystem nur kurzzeitig speichert und die über die Dauer eines Calls hinaus i.a. keine Bedeutung haben oder Zustandsinformationen, die transiente Überlagerungen/ Ergänzungen von konfigurativ vorgegebenen Grundzuständen sind (So könnte ein Port zwar im Grundzustand aktiv, aber wegen einer transienten (vorübergehenden) Störung momentan nicht zugreifbar sein) .

Die Vermittlungssysteme S₁, S_{1b} werden von außen, d.h. durch einen außerhalb von Vermittlungssystem S₁ und Vermittlungssystem S_{1b} gelegenen, übergeordneten realzeitfähigen Monitor aktiviert. Der Monitor kann in Hardware und/ oder Software realisiert sein, und schaltet im Fehlerfall auf den Klon um. Dieser Fall ist insbesondere dann vorzusehen, wenn keine direkte Verbindung zwischen Monitor und Netzwerkmanagement vorgesehen ist. Gemäss vorliegendem Ausführungsbeispiel ist der Monitor als Steuereinrichtung SC und aus Sicherheitsgründen gedoppelt (lokale Redundanz) ausgebildet.

Diese Konfiguration mit vermittlungstechnisch aktivem Vermittlungssystem S₁ soll als Default Konfiguration gelten. Dies bedeutet, dass Vermittlungssystem S₁ vermittlungstechnisch aktiv ist, während sich Vermittlungssystem S_{1b} sich in einem Betriebszustand "hot-standby" befindet. Dieser Zustand ist durch eine aktuelle Datenbasis und volle Aktivität aller Komponenten geprägt, wobei die Crossconnect-Vorrichtung im Normalzustand durch ihren Schaltzustand das redundante Vermittlungssystem S_{1b} vom Zugriff auf bzw. Transport von Nutzdaten und Signalisierung abschirmt.

Da vom Vermittlungssystem S₁ TDM Informationsströme gesendet/ empfangen werden, ist eine Crossconnect-Einrichtung CC notwendig. Diese verfügt über (mindestens) ein paketbasiertes (jederzeit aktives) Interface IF_{cc} und ist mit dem Netzwerkmanagement NM verbunden. Eine Verbindung zur Steuereinrichtung SC ist hier nicht notwendigerweise vorgesehen. Das Netzwerkmanagement NM hat jederzeit die Möglichkeit, die Cross-, connect-Einrichtung CC derart umzuschalten, dass die Peripherie des Vermittlungssystems S₁ auf das Vermittlungssystem S_{1b} geschaltet werden kann. Als wesentlicher Aspekt ist anzusehen, dass die beiden geographisch redundanten Vermittlungssysteme S₁, S_{1b} sowie das Netzwerkmanagement NM und die lokal gedoppelte Steuereinrichtung SC jeweils räumlich deutlich getrennt sein sollten.

Die Steuereinrichtung SC übermittelt dem Netzwerkmanagement NM regelmäßig oder bedarfsweise auf Anforderung den aktuellen Betriebszustand der Vermittlungssysteme S₁ und S_{1b} (act/ standby Zustand der Interfaces) sowie den eigenen Betriebszustand. Die Funktionen der Steuereinrichtung SC können optional teilweise oder auch komplett vom Netzwerkmanagement NM durchgeführt werden. Aus Sicherheitsgründen sollte das Netzwerkmanagement NM die Funktion haben, die oben beschriebenen Umschaltungen jederzeit auch manuell herbeiführen zu können. Optional kann die automatische Umschaltung blockiert werden, so dass die Umschaltung nur manuell durchgeführt werden kann.

In einer Ausgestaltung der Erfindung wird vorgesehen, als Steuereinrichtung SC den Zentralrechner eines weiteren Vermittlungssystems zu verwenden. Damit existiert dann eine Steuereinrichtung mit höchster Verfügbarkeit. Ferner kann die Funktionalität der Steuereinrichtung SC auf das reine Erkennen der Notwendigkeit des Ersatzschaltefalles reduziert werden. Damit wird die Entscheidung zum Umschalten über das Netzwerkmanagement NM auf den Bediener verlagert. Vorgelagerte Multiplexer und Crossconnect Vorrichtung werden nicht mehr direkt von der Steuereinrichtung SC hinsichtlich der Ersatzschaltung gesteuert, sondern mittelbar über das Netzwerkmanagementsystem.

Weiterhin kommt die Etablierung einer unmittelbaren Kommunikationsschnittstelle zwischen Vermittlungssystem S₁ und Vermittlungssystem S_{1b} in Betracht. Diese kann zum Update der Datenbasis z. B. im Hinblick auf SCI -(Subscriber Controlled Input) und Gebühren-Daten genutzt werden sowie auch zum Austausch transienter Daten von einzelnen Verbindungen oder wesentlichen weiteren transienten Daten (z. B. H.248 Association Handle). Damit sind die Störungen des Betriebs aus Teilnehmer- und Betreibersicht minimierbar.

Die semipermanenten und transienten Daten können dann von dem jeweiligen aktiven Vermittlungssystem in das redundante standby Vermittlungssystem in einem zyklischen Zeitraster (Update) übertragen werden. Das Update der SCI-Daten hat den Vorteil, dass das zyklische Restore auf dem standby-System vermieden wird und jederzeit Aktualität bzgl. SCI Daten im standby System herrscht. Durch das Update Stack-relevanter Daten, wie dem H.248 association handle, kann der Peripherie die Übernahme der Peripherie durch ein Ersatzsystem verborgen werden, und es können die Ausfallzeiten noch stärker reduziert werden.

Im folgenden wird ein Ausfallszenario der Konfiguration gemäss der Figur beschrieben:

Im Zuge des Hochlaufs versuchen beide Vermittlungssysteme die Steuereinrichtung SC zu erreichen. Dies ist möglich, da die Steuereinrichtung SC den jeweiligen zentralen Steuerungen CP der Vermittlungssysteme S₁ und S_{1b} bekannt ist. Zeitgleich hierzu versucht auch die Steuereinrichtung SC die beiden Vermittlungssysteme S₁ und S_{1b} anzusprechen. Die Kommunikation erfolgt über eine Steuerschnittstelle. Diese kann IP-basiert, TDM-basiert, ATM-basiert etc. ausgebildet sein. Die Steuereinrichtung SC definiert, welches der beiden Vermittlungssysteme S₁ und S_{1b} den Betriebszustand "act" und "standby" einnehmen soll. Gemäss vorliegendem Ausführungsbeispiel soll dies das Vermittlungssysteme S₁ sein. Die Kommunikation zwischen Vermittlungssystem S_{1b} und der Steuereinrichtung kommt aufgrund dieser Festlegung entweder nicht in Gang, oder die Steuereinrichtung SC teilt Vermittlungssystem S_{1b} explizit mit, dass es den Betriebszustand "standby" einzunehmen hat.

Aufgrund der beschriebenen Netzstruktur führen beide Vermittlungssystem S₁ und S_{1b} gleiche permanente und semipermanente Daten in der Datenbasis, beide sind eingeschaltet und hochgefahren. Die vorgelagerte Crossconnect-Vorrichtung CC verbindet die Peripherie mit Vermittlungssystem S₁. Die Strecken zwischen der Crossconnect-Vorrichtung CC und dem Vermittlungssystem S_{1b} sind eingeschaltet und fehlerfrei, tragen jedoch keine Signalisierung und führen auch keinen Verkehr. Vermittlungssystem S₁ wird vermittlungstechnisch aktiv. Vermittlungssystem S_{1b} ist ebenfalls hochgefahren und hat ungestörte TDM Strecken in Richtung AN, DLU, Trunks von fernen öffentlichen und privaten Vermittlungsstellen. Wegen der vorgelagerten Crossconnect-Vorrichtung CC ist jedoch die Signalisierung zu AN, DLU, Trunks ferner öffentlicher Vermittlungssysteme und PRI jeweils gestört. Hierdurch kann Vermittlungssystem S_{1b} keinen Vermittlungsverkehr aufnehmen.

Aus Sicht des Netzwerkmanagements NM sind beide Vermittlungssysteme verfügbar und werden von ihm im laufenden Betrieb in gleicher Weise aktualisiert. Auch Alarme, die zu Wartungsmaßnahmen führen, werden für beide Vermittlungssysteme über das Netzwerkmanagement NM abgewickelt. Der Komplettausfall der Signalisierung im Vermittlungssystem S_{1b} ist jedoch betriebszustandsspezifisch und führt nicht zu Wartungsmaßnahmen (IDLE Betriebszustand). Sinnvollerweise wird Vermittlungssystem S_{1b} diese Alarme erst gar nicht generieren, wenn es von der Steuereinrichtung SC explizit mitgeteilt bekommt, dass es standby-Funktion hat.

Das Netzwerkmanagement NM steuert allein die Crossconnect-Vorrichtung CC. Diese ist gedoppelt ausgeführt und repräsentiert im wesentlichen den benötigten gedoppelten Anteil des relevanten Transportnetzes. Die Steuereinrichtung SC und die zentralen Steuerungen CP der beiden Vermittlungssysteme S₁ und S_{1b} verifizieren zusammen die Konfiguration durch Austausch von Testnachrichten im Abstand von wenigen Sekunden. Beispielsweise kann dies erfolgen, indem sich das Vermittlungssystem S₁ mit Unterstützung der zentralen Steuerung CP zyklisch bei der Steuereinrichtung SC meldet und eine positive Quittung (z. b. alle 10s) erhält, wohingegen das zyklische Melden von Vermittlungssystem S_{1b} bei der Steuereinrichtung SC mit keiner oder einer negativen Quittung beantwortet wird.

Im folgenden wird nun davon ausgegangen, dass die Kommunikation zwischen Vermittlungssystem S₁ und der Steuereinrichtung SC gestört ist. Dies kann bedeuten, dass Vermittlungssystem S₁ ausgefallen ist, ein Netzproblem aufgetreten ist oder die Steuereinrichtung SC ausgefallen ist. Als Ausführungsbeispiel soll lediglich der erste Fall (Vermittlungssystem S₁ ist ausgefallen.) betrachtet werden.

Zwischen der Steuereinrichtung SC (falls intakt) und den zentralen Steuerungen CP der beiden paarweise angeordneten Vermittlungssysteme S₁, S_{1b} werden zyklische Testnachrichten ausgetauscht. Der Austausch der zyklischen Testnachrichten zwischen der Steuereinrichtung SC und der zentralen Steuerung CP des aktiven Vermittlungssystems S₁ erfolgt, indem sich das aktive Vermittlungssystem S₁ mit Unterstützung seiner zentralen Steuerung CP zyklisch bei der Steuereinrichtung SC meldet und daraufhin eine positive Quittung (z. b. alle 10s) erhält. Der Austausch der zyklischen Testnachrichten zwischen der Steuereinrichtung SC und der zentralen Steuerung CP des hot-standby Vermittlungssystems S_{1b} erfolgt, indem sich das hot-standby Vermittlungssystem S_{1b} mit Unterstützung seiner zentralen Steuerung CP zyklisch bei der Steuereinrichtung SC meldet und daraufhin keine oder eine negative Quittung (z. b. alle 10s) erhält.

Die Steuereinrichtung SC (falls intakt) meldet nun (Ausfall) einen verifizierten, unzulässig lange währenden Kommunikationsverlust an das Netzwerkmanagement NM mit dem Wunsch auf Ersatzschaltung zu Vermittlungssystem S_{1b}. Da die Steuereinrichtung SC die Verfügbarkeit von Vermittlungssystem S_{1b} in der Vergangenheit überwacht hat, und dieses nicht gestört zu sein scheint, ist dieser Wunsch durch die Erwartung begründet, auf ein verfügbares Vermittlungssystem S_{1b} umschalten zu können. Das Netzwerkmanagement NM bestätigt die Umschalteanforderung an die Steuereinrichtung SC und gibt zugehörige Schaltbefehle an die Crossconnect-Vorrichtung CC bzw. die Transportebene heraus. Dies kann automatisch oder mit Bedienereingriff erfolgen. Mit einer positiven Quittung des Netzwerkmanagementsystems NM quittiert die Steuereinrichtung SC die zyklischen Requests von Vermittlungssystem S_{1b} positiv und schaltet damit mit Unterstützung der zentralen Steuerung CP das Vermittlungssystem S_{1b} explizit in den vermittlungstechnisch aktiven Zustand. Ferner quittiert die Steuereinrichtung SC die zyklischen Requests von Vermittlungssystem S₁ bei Erhalt zukünftig negativ und schaltet damit mit Unterstützung der zentralen Steuerung CP das Vermittlungssystem S₁ explizit in den vermittlungstechnisch inaktiven Zustand.

Durch das Umschalten der Crossconnect-Vorrichtung CC werden die Signalisierungsausfälle sukzessive beseitigt. Durch die Etablierung der Kommunikation zu der Steuereinrichtung SC bzw. die positive Quittung von der Steuereinrichtung SC sind fortan Signalisierungsausfälle in Vermittlungssystem S_{1b} sinnvoll am Netzwerkmanagement NM alarmierbar. Vermittlungssystem S_{1b} geht in Betrieb und Vermittlungssystem S₁ wird von der Peripherie und der Fernebene getrennt.

Nach der Reparatur des ausgefallenen Vermittlungssystems S₁ (oder nach dem Ende der Kommunikationsstörung zwischen der Steuereinrichtung SC und dem Vermittlungssystem S₁) erkennt die Steuereinrichtung SC die Wiederverfügbarkeit und überwacht diese für spätere Ausfallszenarien. Ein automatisches Rückschalten auf Vermittlungssystem S₁ erfolgt nicht zwingend, da dies im Hinblick auf den möglichen Verlust von Verbindungen nachteilig ist und auch sonst keine Vorteile bedingt.

Vermittlungssystem S₁ hatte vor der Kommunikationsstörung mit Steuereinrichtung SC bzw. vor seinem Ausfall fehlerfreien Betrieb und Kontakt mit der Steuereinrichtung SC. Nach dem Wiederanlauf nach Reparatur bzw. nach dem Ende der Kommunikationsstörung erfährt das Vermittlungssystem S₁ implizit oder explizit seinen Betriebszustand "Standby" durch die Steuereinrichtung SC. Wenn also Vermittlungssystem S₁ ausgefallen war, nimmt es nach der Reparatur einen Betriebszustand ("Standby") an, der dadurch gekennzeichnet ist, dass es keinen kein Kontakt zu Steuereinrichtung SC aufbauen kann (implizit). Wahlweise wird Vermittlungssystem S₁ von der Steuereinrichtung SC der Betriebzustand "Standby" mitgeteilt (explizit). Durch die Einstellung des vorgelagerten Transportnetzes ist das Vermittlungssystem S₁ von seinen Partnern im Netz getrennt und kann keine Signalisierungsverbindungen aufbauen. In ersterem Fall alarmiert Vermittlungssystem S₁ die Protokollausfälle im zweiten Fall kann es diese Alarmierungen unterdrücken oder zurücknehmen, da sie eindeutige Folge der Konfiguration und keine Fehler sind.

War die Umschaltung nur auf eine temporäre Störung der Kommunikation zwischen Steuereinrichtung SC und Vermittlungssystem S₁ zurückzuführen, dann hat Vermittlungssystem S₁ die mit dem Wegschalten der TDM-Strecken auf Vermittlungssystem S_{1b} einhergehenden Signalisierungsausfälle zu alarmieren. Bei Wiederverfügbarkeit der Kommunikation zwischen Steuereinrichtung SC und Vermittlungssystem S₁ können die Alarme bei expliziter standby-Konfiguration durch Steuereinrichtung SC wieder zurückgenommen werden.

Ist Vermittlungssystem S₁/ S_{1b} eine Ortsvermittlungsstelle mit Teilnehmern, so werden die in den jeweils aktiven Vermittlungssystem S₁/ S_{1b} hineingelaufenen Teilnehmerselbsteingaben (SCI) aus der Wochensicherung des aktiven Vermittlungssystemes in die Datenbasis des standby-Systems eingespielt. Damit wird erreicht, dass SCI-Daten mit erträglichem Aufwand und doch fast aktuell im standby-Vermittlungssystem verfügbar sind. Im Falle eines reinen Trunk-Switches ist das backup für Teilnehmerdaten aus dem aktiven Switch und Restore in den standby Switch nicht notwendig.

Wie bereits angesprochen, ist die erfindungsgemäße Lösung auch auf eine gestörte Kommunikation zwischen Vermittlungssystem S₁ und Steuereinrichtung SC anwendbar, solange das Vermittlungssystem S₁ noch als Plattform funktionsfähig ist. In diesem Fall hat die Steuereinrichtung SC keinen Kontakt zum Vermittlungssystem S₁, wohl aber zum Vermittlungssystem S_{1b}. Das Vermittlungssystem S₁ ist aber noch vermittlungstechnisch aktiv und hat Kontakt zu seinen vermittlungstechnischen Netzpartnern. Die Steuereinrichtung SC aktiviert nun nach Bemerken eines (vermeintlichen) Ausfalls von Vermittlungssystem S₁ das redundante Vermittlungssystem S_{1b}, kann aber Vermittlungssystem S₁ nicht deaktivieren. Dies geschieht jedoch de facto durch das Umschalten des vorgelagerten Transportnetzes.

## Patentansprüche

1. Verfahren zum Ersatzschalten von räumlich getrennten Vermittlungssystemen, die in einer 1:1 Redundanz paarweise angeordnet sind, wobei das eine Vermittlungssystem (S₁) sich in einem aktiven Betriebszustand ("act") und das verbleibende redundante Vermittlungssystem (S_{1b}) sich in einem hot-standby Betriebszustand ("idle") befindet und wobei die Vermittlungssysteme (S₁, S_{1b}) TDM Informationen durchschalten, **dadurch gekennzeichnet,**
**dass** eine Crossconnect-Vorrichtung (CC) durch ihren Schaltzustand das redundante Vermittlungssystem (S_{1b}) vom Zugriff auf bzw. Transport von Nutzdaten und Signalisierung abschirmt, dass eine Kommunikation zwischen mindestens einem übergeordneten, realzeitfähigen Monitor (SC) und mindestens einem der paarweise angeordneten Vermittlungssysteme (S₁, S_{1b}) aufgebaut wird,
**dass** bei Kommunikationsverlust zu dem aktiven Vermittlungssystem (S₁) mit Unterstützung eines Netzwerkmanagements (NM) und der zentralen Steuerung (CP) des redundanten Vermittlungssystems (S_{1b}) auf dieses umgeschaltet wird,
**dass** ein verifizierter Kommunikationsverlust zum vermittlungstechnisch aktiven Vermittlungssystem (S₁) vom mindestens einen Monitor (SC) an das Netzwerkmanagement (NM) gemeldet wird, das daraufhin nach Massgabe der Verfügbarkeit des redundanten Vermittlungssystems (S_{1b}) Umschaltebefehle an den mindestens einen Monitor (SC) und die Crossconnect-Vorrichtung (CC) sendet.

2. Verfahren nach Anspruch 1,
**dadurch gekennzeichnet,**
**dass** zwischen dem mindestens einen übergeordneten Monitor (SC) und den zentralen Steuerungen (CP) der beiden paarweise angeordneten Vermittlungssysteme (S₁, S_{1b}) zyklisch Testnachrichten ausgetauscht werden.

3. Verfahren nach Anspruch 1, 2,
**dadurch gekennzeichnet,**
**dass** der Austausch der zyklischen Testnachrichten zwischen dem mindestens einen übergeordneten Monitor (SC) und der zentralen Steuerung (CP) des aktiven Vermittlungssystems (S₁) gesteuert wird, indem sich das aktive Vermittlungssystem (S₁) mit Unterstützung seiner zentralen Steuerung (CP) zyklisch bei dem Monitor (SC) meldet und daraufhin eine positive Quittung (z. B. alle 10s) erhält.

4. Verfahren nach Anspruch 1, 2,
**dadurch gekennzeichnet,**
**dass** der Austausch der zyklischen Testnachrichten zwischen dem mindestens einen übergeordneten Monitor (SC) und der zentralen Steuerung (CP) des hot-standby Vermittlungssystems (S_{1b}) gesteuert wird, indem sich das hot-standby Vermittlungssystem (S_{1b}) mit Unterstützung seiner zentralen Steuerung (CP) zyklisch bei dem Monitor (SC) meldet und daraufhin keine oder eine negative Quittung (z. B. alle 10s) erhält.

5. Verfahren nach Anspruch 1 bis 4,
**dadurch gekennzeichnet,**
**dass** das Netzwerkmanagement (NM) die Crossconnect-Vorrichtung (CC) derart umschaltet, dass die Peripherie des aktiven Vermittlungssystems (S₁) auf das redundante Vermittlungssystem (S_{1b}) geschaltet wird.

6. Verfahren nach Anspruch 1, 2 oder 3,
**dadurch gekennzeichnet,**
**dass** das Umschalten auf das redundante Vermittlungssystem (S_{1b}) vom Monitor (SC) gesteuert wird, indem er die zyklischen Anforderungen ("Request") des hot-standby Vermittlungssystems (S_{1b}) mit einer positiver Quittung quittiert, woraufhin dieses Vermittlungssystem (S_{1b}) von seiner zentralen Steuerung (CP) explizit in den vermittlungstechnisch aktiven Zustand gesteuert wird.

7. Verfahren nach einem der vorstehenden Ansprüche,
**dadurch gekennzeichnet,**
**dass** nach Behebung des Kommunikationsverlustes ein automatisches Rückschalten auf die vor dem Kommunikationsverlust bestehende Konfiguration nicht vorgenommen wird.

8. Verfahren nach Anspruch 7,
**dadurch gekennzeichnet,**
**dass** das Ende des Kommunikationsverlustes zwischen einem Vermittlungssystem und einem der Monitoren an das Netzwerkmanagement (NM) gemeldet wird.

9. Verfahren nach einem der vorstehenden Ansprüche,
**dadurch gekennzeichnet,**
**dass** das Netzwerkmanagementsystem (NM) das Umsachlaten auf das jeweils vermittlungstechnisch nicht aktive Vermittlungssystem über den mindestens einen Monitor initiiert.

10. Verfahren nach einem der vorstehenden Ansprüche,
**dadurch gekennzeichnet,**
**dass** das Netzwerkmanagement die Ersatzschalteanforderungen einer Mehrzahl der Monitoren bewertet und die Ersatzschaltung des vermittlungstechnisch aktiven Vermittlungssystems nur dann durchführt, falls jeder der dem Netzwerkmanagement zugreifbaren Monitore die Anforderung stellt.

## Claims

1. Method for the back-up switching of spatially separated switching systems which are arranged in pairs in a 1:1 redundancy, one switching system (S₁) being in an active operating state ("act") and the remaining redundant switching system (S_{1b}) being in a hot-standby operating state ("idle"), and the switching systems (S₁, S_{1b}) switching through TDM information, **characterized**
**in that** a cross-connect device (CC), by means of its switching state, shields the redundant switching system (S_{1b}) from access to or transportation of useful data and signalling,
**in that** a communication is set up between at least one higher-level, real-time-capable monitor (SC) and at least one of the switching systems arranged in pairs (S₁, S_{1b}) ,
**in that**, in the case of a loss of communication to the active switching system (S₁) , with the support of a network management (NM) and the central processor (CP) of the redundant switching system (S_{1b}) , change-over to the latter is effected,
**in that** a verified loss of communication to the switching system active in a switching-related manner (S₁) is reported by at least one monitor (SC) to the network management (NM) which thereupon sends change-over commands to the at least one monitor (SC) and the cross-connect device (CC) as determined by the availability of the redundant switching system (S_{1b}) .

2. Method according to Claim 1, **characterized in that** between the at least one higher-level monitor (SC) and the central processors (CP) of the two switching systems arranged in pairs (S₁, S_{1b}) , test messages are cyclically exchanged.

3. Method according to Claim 1, 2, **characterized in that** the exchange of the cyclic test messages between the at least one higher-level monitor (SC) and the central processor (CP) of the active switching system (S₁) is controlled **in that** the active switching system (S₁) cyclically reports to the monitor (SC) with the support of its central processor (CP) and thereupon receives a positive acknowledgement (e.g. every 10 s).

4. Method according to Claim 1, 2, **characterized in that** the exchange of the cyclic test messages between the at least one higher-level monitor (SC) and the central processor (CP) of the hot-standby switching system (S_{1b}) is controlled **in that** the hot-standby switching system (S_{1b}) cyclically reports to the monitor (SC) with the support of its central processor (CP) and thereupon receives no acknowledgement or a negative acknowledgment (e.g. every 10 s).

5. Method according to Claims 1 to 4, **characterized in that** the network management (NM) changes over the cross-connect device (CC) in such a manner that the periphery of the active switching system (S₁) is switched to the redundant switching system (S_{1b}) .

6. Method according to Claim 1, 2 or 3, **characterized in that** the changing-over to the redundant switching system (S_{1b}) is controlled by the monitor (SC) **in that** it acknowledges the cyclic requests of the hot-standby switching system (S_{1b}) with a positive acknowledgement, whereupon this switching system (S_{1b}) is explicitly controlled by its central processor (CP) into the state which is active in a switching-related manner.

7. Method according to one of the preceding claims, **characterized in that** after elimination of the loss of communication, an automatic switching-back to the configuration existing before the loss of communication is not carried out.

8. Method according to Claim 7, **characterized in that** the end of the loss of communication between a switching system and one of the monitors is reported to the network management (NM).

9. Method according to one of the preceding claims, **characterized in that** the network management system (NM) initiates the changing-over to the switching system which is in each case not active in a switching-related manner via the at least one monitor.

10. Method according to one of the preceding claims, **characterized in that** the network management evaluates the back-up switching requests of a plurality of the monitors and carries out the back-up switching of the switching system which is active in a switching-related manner only if each of the monitors accessible to the network management makes the request.

## Revendications

1. Procédé de commutation de remplacement de systèmes de commutation séparés dans l'espace et agencés par paires avec une redondance de 1:1, un système de commutation (S₁) se trouvant dans un état de fonctionnement actif (« act ») et l'autre système de commutation redondant (S_{1b}) se trouvant dans un état de fonctionnement « hot standby » (« idle »), et les systèmes de commutation (S₁, S_{1b}) interconnectant des informations TDM, **caractérisé en ce que** :
- un dispositif d'interconnexion (CC), du fait de son état de commutation, protège le système de commutation redondant (S_{1b}) de l'accès à resp. du transport de données utiles et de la signalisation ;
- une communication est établie entre au moins un moniteur superordonné et apte au temps réel (SC) et au moins l'un des systèmes de commutation agencés par paires (S₁, S_{1b}) ;
- en cas de perte de communication avec le système de commutation actif (S₁) , il y a, à l'aide d'une gestion de réseau (NM) et de la commande centrale (CP) du système de commutation redondant (S_{1b}), commutation sur celui-ci ;
- une perte de communication vérifiée avec le système de commutation (S₁) actif sur le plan de la technique de commutation est signalée par au moins un moniteur (SC) à la gestion de réseau (NM) qui envoie ensuite, selon la disponibilité du système de commutation redondant (S_{1b}), des ordres de commutation à l'au moins un moniteur (SC) et au dispositif d' interconnexion (CC).

2. Procédé selon la revendication 1, **caractérisé en ce que** sont échangés cycliquement des messages de test entre l'au moins un moniteur superordonné (SC) et les commandes centrales (CP) des deux systèmes de commutation agencés par paires (S₁, S_{1b}) .

3. Procédé selon la revendication 1, 2, **caractérisé en ce que** l'échange des messages de test cycliques entre l'au moins un moniteur superordonné (SC) et la commande centrale (CP) du système de commutation actif (S₁) est commandé par le fait que le système de commutation actif (S₁) , à l'aide de sa commande centrale (CP), se connecte cycliquement au moniteur (SC) et reçoit ensuite une confirmation positive (par exemple, toutes les 10 s).

4. Procédé selon la revendication 1, 2, **caractérisé en ce que** l'échange des messages de test cycliques entre l'au moins un moniteur superordonné (SC) et la commande centrale (CP) du système de commutation en « hot standby » (S_{1b}) est commandé par le fait que le système de commutation en « hot standby » (S_{1b}), à l'aide de sa commande centrale (CP), se connecte cycliquement au moniteur (SC) et ne reçoit ensuite pas de confirmation ou reçoit ensuite une confirmation négative (par exemple, toutes les 10 s).

5. Procédé selon la revendication 1 à 4, **caractérisé en ce que** la gestion de réseau (NM) commute le dispositif d'interconnexion (CC) de manière telle que la périphérie du système de commutation actif (S₁) est commutée sur le système de commutation redondant (S_{1b}) .

6. Procédé selon la revendication 1, 2 ou 3, **caractérisé en ce que** la commutation sur le système de commutation redondant (S_{1b}) est commandée par le moniteur (SC) par confirmation positive, par ce dernier, des requêtes cycliques (« Request ») du système de commutation en « hot standby » (S_{1b}), suite à quoi ce système de commutation (S_{1b}) est explicitement mis à l'état actif sur le plan de la technique de commutation par sa commande centrale (CP).

7. Procédé selon l'une des revendications précédentes, **caractérisé en ce que**, après qu'il a été remédié à la perte de communication, il n'est pas procédé à une commutation de retour automatique sur la configuration qui existait avant la perte de commutation.

8. Procédé selon la revendication 7, **caractérisé en ce que** la fin de la perte de communication entre un système de commutation et l'un des moniteurs est signalée à la gestion de réseau (NM).

9. Procédé selon l'une des revendications précédentes, **caractérisé en ce que** le système de gestion de réseau (NM) initialise la commutation sur le système de commutation respectivement non actif sur le plan de la technique de commutation via l'au moins un moniteur.

10. Procédé selon l'une des revendications précédentes, **caractérisé en ce que** la gestion de réseau évalue les requêtes de commutation de remplacement d'une pluralité de moniteurs et effectue la commutation de remplacement du système de commutation actif sur le plan de la technique de commutation uniquement si chacun des moniteurs auxquels peut accéder la gestion de réseau présente la requête.
